(19) Europäisches Patentamt / European Patent Office / Office européen des brevets

(11) **EP 3 806 008 A1**

(12) **EUROPEAN PATENT APPLICATION**
published in accordance with Art. 153(4) EPC

(43) Date of publication:
**14.04.2021 Bulletin 2021/15**

(21) Application number: **19806797.7**

(22) Date of filing: **22.05.2019**

(51) Int Cl.:
*G06Q 10/04* (2012.01)    *G06Q 10/06* (2012.01)
*G06F 7/60* (2006.01)    *G06F 17/40* (2006.01)

(86) International application number:
**PCT/JP2019/020289**

(87) International publication number:
**WO 2019/225652 (28.11.2019 Gazette 2019/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.05.2018 JP 2018100551**

(71) Applicant: **NEC Corporation**
**108-8001 Tokyo (JP)**

(72) Inventors:
- **TAKATA Soichiro**
  **Tokyo 108-8001 (JP)**
- **INOUE Hirofumi**
  **Tokyo 108-8001 (JP)**
- **MATAGA Junichiro**
  **Tokyo 108-8001 (JP)**

(74) Representative: **Betten & Resch**
**Patent- und Rechtsanwälte PartGmbB**
**Maximiliansplatz 14**
**80333 München (DE)**

(54) **MODEL GENERATION DEVICE FOR LIFESPAN PREDICTION, MODEL GENERATION METHOD FOR LIFESPAN PREDICTION, AND STORAGE MEDIUM STORING MODEL GENERATION PROGRAM FOR LIFESPAN PREDICTION**

(57)    A model generation device 30 comprises: an actual result information generation unit 31 that, on the basis of failure history information 301 of an object for which the lifespan is to be predicted, uses an order statistic quantity calculation method 310 to generate actual result information 311 representing the relationship between a use time relating to the object and a reliability degree; a probability distribution model generation unit 32 that generates a probability distribution model 321 similar to the actual result information 311, for each period obtained by setting a number of divisions for dividing the use time into at least one period and then dividing the use time into the set number of divisions; a calculation unit 33 that, for each number of divisions, uses an information quantity criteria 330 to calculate the compatibility 331 of the probability distribution model 321 with respect to the actual result information 311; and a determination unit 34 that determines a probability distribution model 321 for a number of divisions having the highest compatibility. Due to the foregoing, the present invention uses a probability distribution model relating to reliability to improve the prediction accuracy when predicting the lifespan of the object.

Fig. 6

MODEL GENERATION DEVICE 30

FAILURE HISTORY INFORMATION 301

ACTUAL OPERATION INFORMATION GENERATION UNIT 31
ORDER-STATISTIC CALCULATION METHOD 310

ACTUAL OPERATION INFORMATION 311

PROBABILITY DISTRIBUTION MODEL GENERATION UNIT 32

PROBABILITY DISTRIBUTION MODEL 321

CALCULATION UNIT 33
INFORMATION CRITERION 330

GOODNESS OF FIT 331

DETERMINATION UNIT 34

**Description**

[Technical Field]

The present invention relates to a technique for predicting the life of an object using a probability distribution model of reliability.

[Background Art]

If a system for constructing a social infrastructure (e.g., structures such as water pipes and bridges, electronic equipment, etc.) deteriorates over time, thereby causing the system to fail to meet the reliability standard (that is, the system has reached its end of life), but the system is still used as it is, an accident may occur and may cause a serious impact on society. Therefore, it is a big issue in modern society to predict the life of objects including systems for constructing social infrastructure with high accuracy.

According to JIS Z 8115, the Japanese industrial standard for reliability terms, the reliability of a system is defined as an "ability of an item to perform the required function under given conditions for a given period". In addition, as characteristic values representing reliability, there are a reliability, an unreliability, a failure rate, and the like, and reliability is defined, for example, as a "probability that an item can perform the required function for a given time length (t1, t2) under given conditions".

The reliability defined in this manner is a characteristic value enabling statistical evaluation of the life of the system, and is a value that can be predicted based on information indicating a past failure or accident history. As a typical method for predicting the reliability and the life of an object, a method using a probability distribution model such as a Weibull distribution model is known and has been put into practical use in various fields. This is a method for predicting the reliability and the life of an object by obtaining a statistical parameter such as Weibull distribution concerning reliability using time (use time of the object) as a probability variable using an order statistic.

As a technique related to such a method, PTL 1 discloses an operation rate prediction device that predicts an operation rate with high accuracy based on a small amount of actual operation data. This device stores an initial failure risk matrix that defines the correspondence between the level of the evaluation item related to the failure rate and the failure coefficient. This device sets a failure coefficient of a component based on the initial failure risk matrix from a level related to an evaluation item of the component, and estimates a failure rate of the component using the failure coefficient. This device then estimates the operation rate of a mechanical system to be predicted based on the failure rate of each of a plurality of components. However, the initial failure risk matrix is fitted to match the actual operation record of the operation rate of a similar mechanical system that has been estimated.

Further, PTL 2 discloses an inspection method of an electro-optical device in which the reliability of an actual product is estimated with high accuracy by using a small number of test samples. In this method, in an electro-optical device having an element substrate including a storage capacitor for each pixel, a test voltage is applied to the storage capacitors in the element substrate. In this method, the storage capacitor destroyed by the application of the test voltage is detected for each pixel. This method then generates Weibull plots from the temporal change of the ratio of the destroyed storage capacitors out of the storage capacitors to which the test voltage is applied.

[Citation List]

[Patent Literature]

[PTL 1] JP 2016-126728 A
[PTL 2] JP 2008-190886 A

[Summary of Invention]

[Technical Problem]

In general, there is a plurality of factors that cause a failure in an object whose life is predicted. That is, there is generally a plurality of failure modes associated with an object. For different failure modes, probability distribution models such as Weibull distribution models of reliability are often different, and therefore, when the life of an object is predicted by using, for example, a single probability distribution model, a high accuracy is not achieved with respect to the prediction of the life, which is disadvantageous. PTLs 1 and 2 do not specifically mention this disadvantage. A main object of the present invention is to provide a model generation device and the like that overcome this disadvantage.

[Solution to Problem]

A model generation device for life prediction according to an aspect of the present invention includes: actual operation information generation means for generating actual operation information indicating a relationship between a use time and a reliability of an object whose life is predicted, in accordance with failure history information of the object by using an order-statistic calculation method; probability distribution model generation means for setting a number of division by which the use time is divided into one or more periods, and then generating a probability distribution model that approximates the actual operation information for each of the periods obtained by dividing the use time by the number of division being set; calculation means for calculating a goodness of fit of the probability distribution model to the actual operation information for each of the number of division by using an information criterion; and determination means for determining the probability distribution model at the number of division providing the highest goodness of fit.

According to another aspect of the present invention to achieve the above-described object, a model generation method for life prediction performed by an information processing device includes: generating actual operation information indicating a relationship between a use time and a reliability of an object whose life is predicted, in accordance with failure history information of the object by using an order-statistic calculation method; setting a number of division by which the use time is divided into one or more periods, and then generating a probability distribution model that approximates the actual operation information for each of the periods obtained by dividing the use time by the number of division being set; calculating a goodness of fit of the probability distribution model to the actual operation information for each of the number of division by using an information criterion; and determining the probability distribution model at the number of division providing the highest goodness of fit.

According to still another aspect of the present invention to achieve the above-described object, a model generation program for life prediction causes a computer to: generate actual operation information indicating a relationship between a use time and a reliability of an object whose life is predicted, in accordance with failure history information of the object by using an order-statistic calculation method; set a number of division by which the use time is divided into one or more periods, and then generate a probability distribution model that approximates the actual operation information for each of the periods obtained by dividing the use time by the number of division being set; calculate a goodness of fit of the probability distribution model to the actual operation information for each of the number of division by using an information criterion; and determine the probability distribution model at the number of division providing the highest goodness of fit.

The present invention can also be embodied by a computer-readable non-volatile recording medium storing the above-described model generation program (computer program) for life prediction.

[Advantageous Effects of Invention]

The present invention achieves improvement of the prediction accuracy when the life of an object is predicted using a probability distribution model of reliability.

[Brief Description of Drawings]

Fig. 1 is a block diagram illustrating a configuration of a model generation device 10 according to a first example embodiment of the present invention.
Fig. 2 is a graph illustrating Weibull plots 153 and a Weibull distribution model that best fits the Weibull plots 153, generated by the model generation device 10 according to the first example embodiment of the present invention.
Fig. 3 is a graph illustrating the relationship between the number of division (model order) of the use time and an AIC represented by a goodness of fit calculation result 156 according to the first example embodiment of the present invention.
Fig. 4 is a histogram illustrating the result of life prediction of an object based on the Weibull distribution model determined by the model generation device 10 according to the first example embodiment of the present invention.
Fig. 5 is a flowchart illustrating an operation of the model generation device 10 according to the first example embodiment of the present invention.
Fig. 6 is a block diagram illustrating a configuration of a model generation device 30 according to a second example embodiment of the present invention.
Fig. 7 is a block diagram illustrating a configuration of an information processing device 900 capable of implementing the model generation devices according to any of the example embodiments of the present invention.

[Example Embodiment]

Hereinafter, example embodiments of the present invention will be described in detail with reference to the drawings.

<First Example Embodiment>

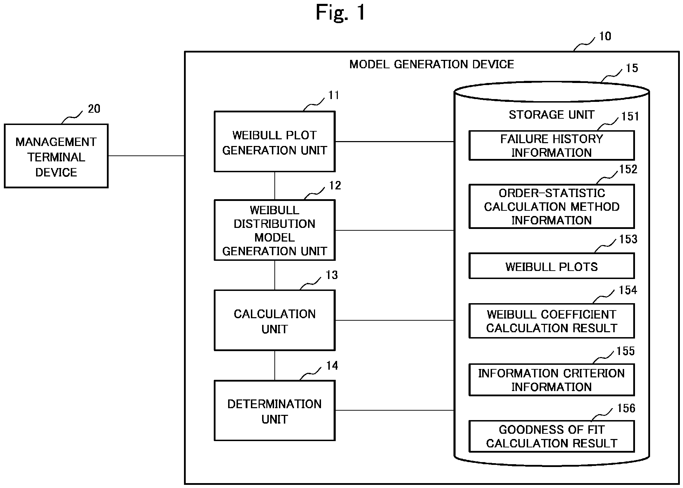

Fig. 1 is a block diagram illustrating a configuration of a model generation device 10 according to a first example embodiment of the present invention. The model generation device 10 is an information processing device that supports prediction of the life of an object such as a system for constructing a social infrastructure, by using a Weibull distribution model as a probability distribution model of the reliability (probability of no failure) of the object.

The model generation device 10 is communicably connected to a management terminal device 20. The management terminal device 20 is, for example, a terminal device such as a personal computer that is used when a user inputs information to the model generation device 10 or when a user confirms information output from the model generation device 10.

The model generation device 10 includes a Weibull plot generation unit 11 (actual operation information generation unit), a Weibull distribution model generation unit 12 (probability distribution model generation unit), a calculation unit 13, a determination unit 14, and a storage unit 15. The storage unit 15 is, for example, a storage device such as an electronic memory or a magnetic disk. The storage unit 15 stores failure history information 151, order-statistic calculation method information 152, Weibull plots 153, a Weibull coefficient calculation result 154, information criterion information 155, and a goodness of fit calculation result 156. Details of the information stored in the storage unit 15 will be described below.

The failure history information 151 is information indicating a failure history including, for example, a time of occurrence of a failure in the object. The failure history information 151 is, for example, information including identification information enabling identification of an object and a failure history associated with each other. The failure history information 151 may alternatively be information including information indicating a characteristic of an object and a failure history associated with each other. Note that the information indicating the characteristic of the object is, for example, when the object is a water pipe line, information indicating at least one of the diameter the pipe thickness, the material of the water pipe line, or the like. That is, the failure history information 151 is information indicating the occurrence status of a failure for each object or for each object type.

Next, the relationship between the use time and the reliability of an object when a Weibull distribution model is used as the probability distribution model of reliability of the object will be described.

In this case, the reliability R(t) can be expressed as equation 1.

$$R(t) = \exp\left\{-\left(\frac{t}{\eta}\right)^m\right\} \ \ldots\ldots (\text{equation } 1)$$

In equation 1, "t" represents the use time the object, "$\eta$" represents a scale parameter of the Weibull distribution, "m" represents a Weibull coefficient (shape parameter) of the Weibull distribution, and "exp" represents the natural exponential function.

In this case, the unreliability (probability of failure) F(t) of the object can be expressed as equation 2.

$$F(t) = 1 - R(t) = 1 - \exp\left\{-\left(\frac{t}{\eta}\right)^m\right\} \ \ldots\ldots (\text{equation } 2)$$

By performing a logarithmic conversion on equation 2, equation 3 is obtained.

$$\ln(\ln(1/(1 - F(t)))) = m\ln t - m\ln\eta \ \ldots \ \ (\text{equation } 3)$$

In equation 3, "ln" is an operator representing a natural logarithm, and "/" is an operator representing a division.

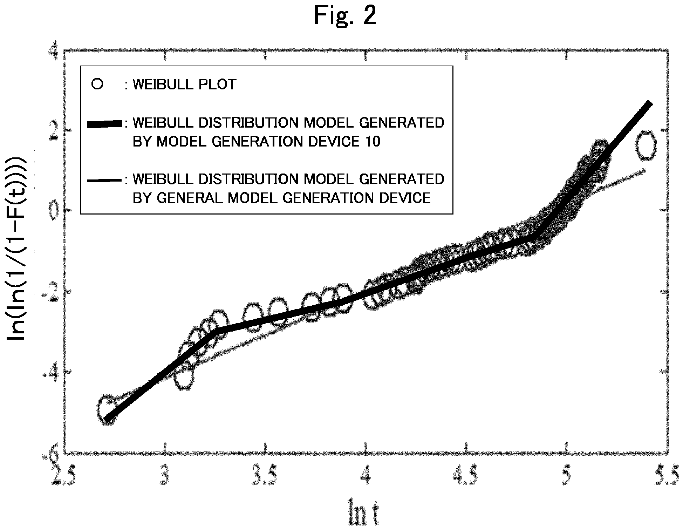

equation 3 expresses that "ln(ln(1/(1 - F(t))))" and "lnt" have a linear relationship when a Weibull distribution model is used as a probability distribution model of reliability of the object, equation 3 also expresses that in a graph where "lnt" is on the X axis and "ln (ln (1/(1 - F (t))))" is on the Y-axis (see Fig. 2, which will be described below), the slope is the Weibull coefficient m.

The Weibull plot generation unit 11 generates the Weibull plots 153 (actual operation information) representing the relationship between the use time and the reliability of the object based on the failure history information 151 of the object and the order-statistic calculation method information 152.

Fig. 2 is a graph illustrating the Weibull plots 153 according to the present example embodiment and a Weibull distribution model that is generated as described below by the model generation device 10 and that best fits the Weibull plots 153. Fig. 2 and Figs. 3 and 4, which will be described below, illustrate the results of evaluation of the operation of the model generation device 10 according to the present example embodiment by the inventor of the present invention using sample data related to a normal cast iron pipe (Cast Iron) having a diameter of 150 mm and a reference pipe thickness of 11 mm.

The reliability or unreliability of the object is a value obtained by using a calculation method of the order-statistic indicated by the order-statistic calculation method information 152 based on the failure history indicated by the failure history information 151 of the object. Examples of the calculation method of the order-statistic indicated by the order-statistic calculation method information 152 include the average rank method, the median rank method, and the mode rank method. Since the average rank method, the median rank method, the mode rank method, and the like are well known as methods for calculating the order statistic, a detailed description thereof will not be provided here.

The Weibull plot generation unit 11 generates the Weibull plots 153 that represent the relationship between lnt and ln(ln(1/(1 - F (t)))) calculated based on the failure history information 151 of the object and the order-statistic calculation method information 152 and that are plotted as "o" in Fig. 2 regarding the object unreliability (probability of failure).

The Weibull distribution model generation unit 12 illustrated in Fig. 1 sets the number of division M by which the use time of the object is divided into one or more periods, and then generates a Weibull distribution model that approximates the Weibull plots 153 for each of periods obtained by dividing the use time by the set number of division M (M is any integer equal to or more than 1). The number of division M represents the number of Weibull distribution models (Model Order) when it is assumed that the probability distribution related to the reliability of an object is represented by a mixed Weibull distribution model in which a plurality of Weibull distribution models is mixed.

The Weibull distribution model generation unit 12 divides lnt (a value representing the natural logarithm of the use time) on the horizontal axis of the graph illustrated in Fig. 2 into M periods. At this time, for example, the Weibull distribution model generation unit 12 divides the lnt into M periods having equal lengths or substantially equal lengths. The Weibull distribution model generation unit 12 may alternatively divide the lnt into M periods based on a more complicated division rule obtained by performing a predetermined operation on the Weibull plots 153.

The Weibull distribution model generation unit 12 generates a Weibull distribution model that approximates the Weibull plots 153. In the Weibull distribution model, the i-th (i is one integer from 1 to M) period (period i) in the above-described M periods is represented by a straight line obtained by linearly interpolating the values $(x_i, y_i)$ and $(x_{i+1}, y_{i+i})$ indicated by the Weibull plots 153 illustrated in Fig. 2 at both ends of the period. That is, the Weibull distribution model generation unit 12 obtains the slope mi of the straight line obtained by linear interpolation (that is, the Weibull coefficient of the Weibull distribution model that approximates the Weibull plots 153 in period i) based on the simultaneous equations represented by the matrix expression as equation 4.

$$\begin{pmatrix} x_i & 1 \\ x_{i+1} & 1 \end{pmatrix} \begin{pmatrix} m_i \\ b_i \end{pmatrix} = \begin{pmatrix} y_i \\ y_{i+1} \end{pmatrix} \quad \ldots\ldots \text{(equation 4)}$$

The Weibull distribution model generation unit 12 calculates the Weibull coefficient mi for each of the M periods. In addition, the Weibull distribution model generation unit 12 stores, in the storage unit 15, the Weibull coefficient calculation result 154 representing the result of calculation of the above-described Weibull coefficients mi for each number of division M while increasing the number of division M from 1.

The calculation unit 13 illustrated in Fig. 1 calculates the goodness of fit (likelihood) of the Weibull distribution model represented by the Weibull coefficients mi to the Weibull plots 153 for each number of division M based on the Weibull coefficient calculation result 154 using the information criterion information 155. The information criterion indicated by the information criterion information 155 is an index for quantitatively evaluating the goodness of fit, and for example, the Akaike's Information Criterion (AIC), the Bayesian Information Criterion (BIC), and the like are known.

For example, the value AIC calculated using the Akaike's Information Criterion is calculated as expressed by equation 5.

$$\text{AIC} = \text{Nln}\sigma^2 + 2\text{M} + \text{Nln}2\pi \ldots \quad \text{(equation 5)}$$

In equation 5, N represents the sample size (the number of data pieces) of the Weibull plots 153, and $\pi$ represents

the circumference ratio. In equation 5, $\sigma^2$ represents the variance between the Weibull distribution model expressed by the Weibull coefficients mi and the Weibull plots 153 (prediction error). That is, the smaller the value of AIC, the higher the goodness of fit of the Weibull distribution model represented by the Weibull coefficients mi to the Weibull plots 153.

Based on the Weibull coefficients mi for each number of division M represented by the Weibull coefficient calculation result 154 and the Weibull plots 153, the calculation unit 13 calculates, for example, the AIC expressed by equation 5 for each number of division M, and stores the goodness of fit calculation result 156 representing the calculation result in the storage unit 15.

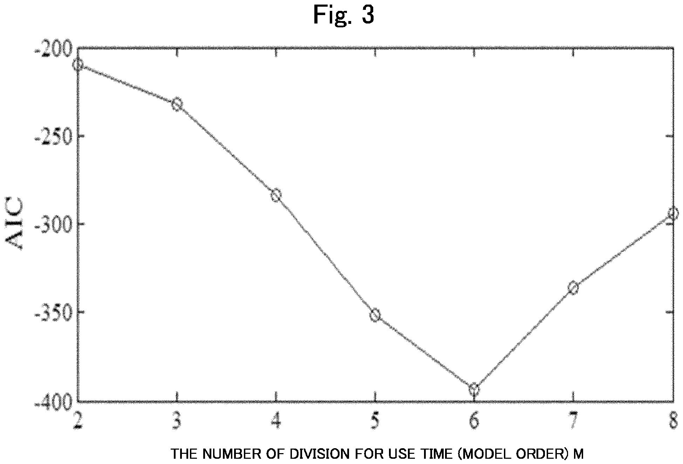

Fig. 3 is a graph illustrating the relationship between the number of division (model order) M of the use time and the AIC represented by the goodness of fit calculation result 156 according to the present example embodiment. As illustrated in Fig. 3, the AIC decreases as the number of division M of the use time increases, and is minimized when the number of division M is 6. The AIC increases when the number of division M exceeds 6.

The determination unit 14 illustrated in Fig. 1 determines the Weibull distribution model at the number of division M making the goodness of fit of the Weibull distribution model represented by the Weibull coefficients mi to the Weibull plots 153 the highest. That is, based on the goodness of fit calculation result 156 illustrated in Fig. 3, the determination unit 14 detects that the AIC is minimized when the number of division M is 6. The determination unit 14 may present the Weibull coefficients mi of the Weibull distribution model when the number of division M is 6 to a user, for example, via the management terminal device 20.

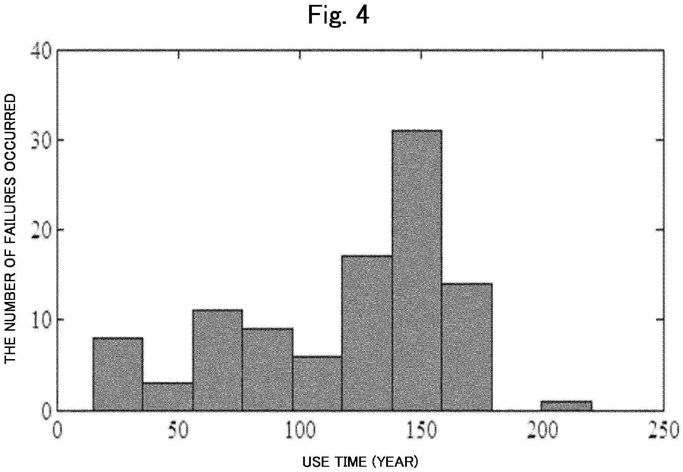

Fig. 4 illustrates a histogram illustrating the result of the life prediction of an object using the model generation device 10 or an external device, based on the Weibull distribution model at the number of division M making the goodness of fit to the Weibull plots 153 the highest as determined by the model generation device 10 according to the present example embodiment. This histogram indicates that about 50 failures are predicted to occur by the time when the use time of the object reaches 100 years, and a large number of failures are expected to occur around the time when the use time is 150 years.

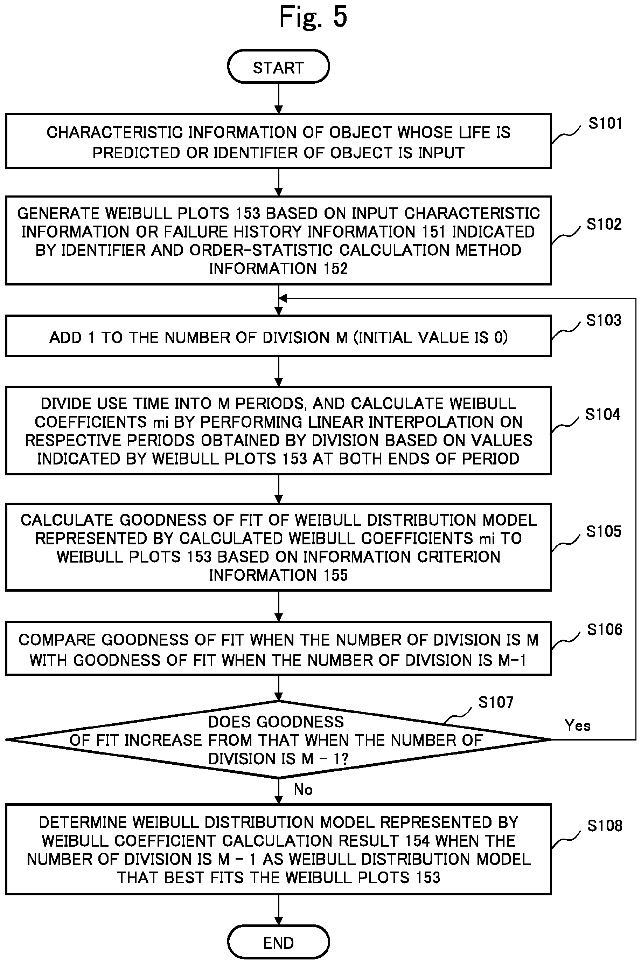

Next, the operation (processing) of the model generation device 10 according to the present example embodiment will be described in detail with reference to a flowchart of Fig. 5.

By an input operation of a user to the management terminal device 20, characteristic information of an object whose life is predicted or an identifier of the object is input from the management terminal device 20 to the model generation device 10 (step S101). The Weibull plot generation unit 11 generates Weibull plots 153 based on the input characteristic information or the failure history information 151 indicated by the identifier and the order-statistic calculation method information 152, and stores the generated Weibull plots 153 in the storage unit 15 (step S102).

The Weibull distribution model generation unit 12 adds 1 to the number of division M (initial value is 0) (step S103). The Weibull distribution model generation unit 12 divides the logarithmically converted use time into M periods, and calculates the Weibull coefficients mi by performing linear interpolation on respective periods obtained by the division based on the values indicated by the Weibull plots 153 at both ends of the period, and stores the Weibull coefficient calculation result 154 representing the calculation result in the storage unit 15 (step S104).

The calculation unit 13 calculates the goodness of fit of the Weibull distribution model represented by the Weibull coefficients mi calculated by the Weibull distribution model generation unit 12 to the Weibull plots 153 based on the Weibull coefficient calculation result 154 and the information criterion information 155, and stores the goodness of fit calculation result 156 representing the calculation result in the storage unit 15 (step S105). The determination unit 14 compares the goodness of fit when the number of division is M with the goodness of fit when the number of division is M-1 represented by the goodness of fit calculation result 156 (step S106).

If the goodness of fit when the number of division is M increases from that when the number of division is M - 1 (Yes in step S107), the processing returns to step S103. If the goodness of fit when the number of division is M does not increase (that is, decreases or does not change) from that when the number of division is M - 1 (No in step S107), the determination unit 14 determines the Weibull distribution model represented by the Weibull coefficient calculation result 154 when the number of division is M - 1 as the Weibull distribution model that best fits the Weibull plots 153 (step S108), and the entire processing ends.

The model generation device 10 according to the present example embodiment can improve the prediction accuracy when predicting the life of an object using a probability distribution model of reliability. This is because the model generation device 10 sets the number of division M by which the use time of the object is divided, thereafter generates a Weibull distribution model that approximates the Weibull plots 153 for each of the periods obtained by the division, calculates a goodness of fit of the Weibull distribution model to the Weibull plots 153 for each number of division M, and determines the Weibull distribution model at the number of division M making the goodness of fit the highest.

The effects achieved by the model generation device 10 according to the present example embodiment will be described in detail below.

In general, there is a plurality of factors that cause a failure in an object whose life is predicted. That is, there is generally a plurality of failure modes associated with an object. For different failure modes, probability distribution models such as Weibull distribution models of reliability are often different, and therefore, when the life of an object is predicted by using, for example, a single probability distribution model, a high accuracy is not achieved with respect to the prediction of the life, which is disadvantageous.

In order to overcome this disadvantage, the model generation device 10 according to the present example embodiment includes the Weibull plot generation unit 11 (actual operation information generation unit), the Weibull distribution model generation unit 12 (probability distribution model generation unit), the calculation unit 13, and the determination unit 14, and operates as described above with reference to, for example, Figs. 1 to 5. That is, the Weibull plot generation unit 11 generates the Weibull plots 153 (actual operation information) representing the relationship between the use time and the reliability of the object based on the failure history information 151 of the object whose life is predicted, and using the order-statistic calculation method indicated by the order-statistic calculation method information 152. The Weibull distribution model generation unit 12 sets the number of division M by which the use time is divided into one or more periods, and then generates a Weibull distribution model (probability distribution model) that approximates the Weibull plots 153 for each of periods obtained by dividing the use time by the set number of division M. The calculation unit 13 calculates the goodness of fit of the Weibull distribution model to the Weibull plots 153 for each number of division M using the information criterion indicated by the information criterion information 155. The determination unit 14 then determines a Weibull distribution model at the number of division M providing the highest goodness of fit.

That is, the model generation device 10 according to the present example embodiment calculates the Weibull coefficients of the mixed Weibull distribution model that best fits the Weibull plots 153 on the premise that the Weibull distribution model of the reliability is a mixed Weibull distribution model including a plurality of distribution models, so that the accuracy of predicting the life of an object can be improved.

The bold line illustrated as an example in Fig. 2 represents a mixed Weibull distribution model that best fits the Weibull plots 153 obtained by the model generation device 10 according to the present example embodiment with respect to the sample data. The straight line of the thin line illustrated in Fig. 2 represents a single Weibull distribution model that fits the Weibull plots 153 obtained by a general model generation device with respect to the sample data. Fig. 2 illustrates that the mixed Weibull distribution model obtained by the model generation device 10 according to the present example embodiment has a higher goodness of fit to the Weibull plots 153 than a single Weibull distribution model obtained by a general model generation device.

In addition, the Weibull distribution model generation unit 12 according to the present example embodiment generates a Weibull distribution model for each number of division M while sequentially increasing the number of division M, and the determination unit 14 detects the number of division M at which the change of the goodness of fit turns from increase to decrease (the change of the AIC turns from decrease to increase) as the number of division M increases. Since the change of the goodness of fit normally turns from increase to decrease as the number of division M increases, the model generation device 10 according to the present example embodiment can efficiently detect the number of division M at which the goodness of fit is the maximum (the AIC is minimized).

The probability distribution model of reliability used by the model generation device 10 according to the present example embodiment is not limited to the Weibull distribution model. The model generation device 10 may use a different probability distribution model such as gamma distribution model.

The model generation device 10 according to the present example embodiment can use an average rank method, a median rank method, a mode rank method, or the like as an order-statistic calculation method. That is, the model generation device 10 can improve the accuracy of predicting the life of an object by using an appropriate order-statistic calculation method according to the characteristic of the time transition related to the reliability (deterioration) of the object.

The model generation device 10 according to the present example embodiment can use the Akaike's Information Criterion, the Bayesian Information Criterion, or the like as the information criterion. That is, the model generation device 10 can improve the accuracy of predicting the life of an object by using an appropriate information criterion according to the characteristic of the time transition related to the reliability (deterioration) of the object.

The failure history information 151 according to the present example embodiment is information in which at least one of information indicating a characteristic of an object or identification information capable of identifying the object is associated with a failure history of the object. That is, the failure history information 151 is information for managing the failure history for each object or for each object type. This enables the model generation device 10 according to the present example embodiment to support flexible prediction such as prediction of the life of each object or prediction of the life of each object type.

<Second Example Embodiment>

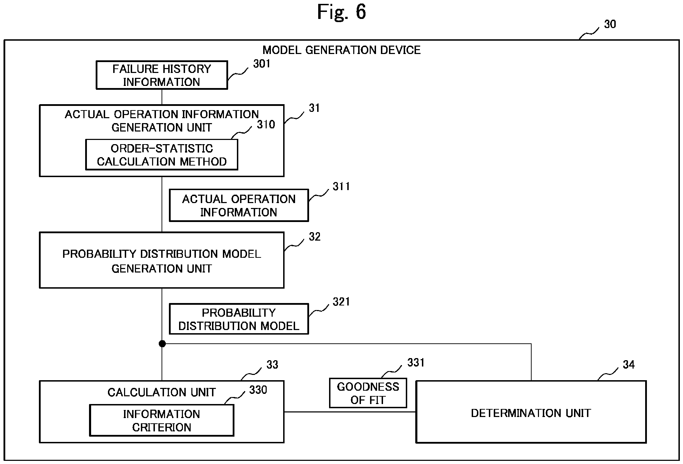

Fig. 6 is a block diagram illustrating a configuration of a model generation device 30 according to a second example embodiment of the present invention.

The model generation device 30 according to the present example embodiment includes an actual operation information generation unit 31, a probability distribution model generation unit 32, a calculation unit 33, and a determination unit 34.

The actual operation information generation unit 31 generates actual operation information 311 representing the relationship between the use time and the reliability of an object whose life is predicted based on failure history information 310 of that object, and using order-statistic calculation method 310.

The probability distribution model generation unit 32 sets the number of division by which the use time is divided into one or more periods, and then generates a probability distribution model 321 that approximates the actual operation information 311 for each of periods obtained by dividing the use time by the set number of division.

The calculation unit 33 calculates a goodness of fit 331 of the probability distribution model 321 to the actual operation information 311 for each number of division using information criterion 330.

The determination unit 34 determines the probability distribution model 321 at the number of division providing the highest goodness of fit 331.

The model generation device 30 according to the present example embodiment can improve the prediction accuracy when predicting the life of an object using a probability distribution model of reliability. This is because the model generation device 30 sets the number of division by which the use time of the object is divided, thereafter generates the probability distribution model 321 that approximates the actual operation information 311 for each of the periods obtained by the division, calculates the goodness of fit 331 of the probability distribution model 321 to the actual operation information 311 for each number of division, and determines the probability distribution model 321 at the number of division making the goodness of fit 331 the highest.

<Hardware Configuration Example>

In each of the above-described example embodiments, each part of the model generation device illustrated in Fig. 1 or 6 can be implemented by dedicated HardWare (HW) (electronic circuit). In Figs. 1 and 6, at least the following components can be regarded as functional (processing) units (software modules) of a software program.

- the Weibull plot generation unit 11 and the actual operation information generation unit 31
- the Weibull distribution model generation unit 12 and the probability distribution model generation unit 32
- the calculation units 13 and 33
- the determination units 14 and 34
- a storage control function of the storage unit 15

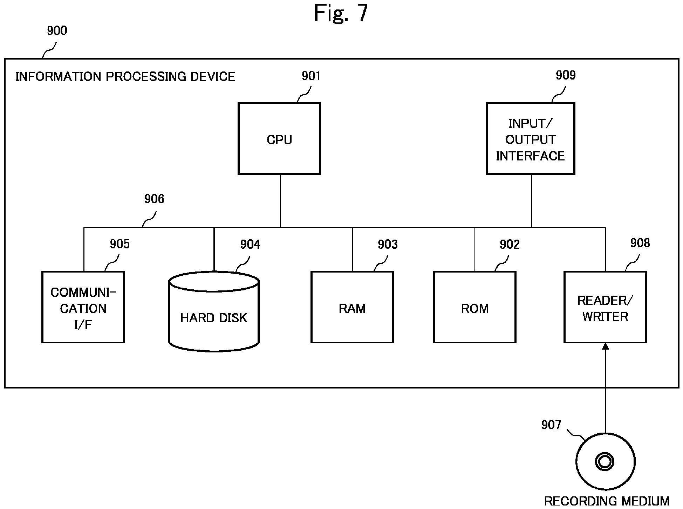

However, the ways of division to the components illustrated in these drawings are for convenience of description, and various configurations can be assumed upon implementation. An example of the hardware environment in this case will be described with reference to Fig. 7.

Fig. 7 is a diagram illustrating a configuration of an information processing device 900 (computer) capable of implementing the model generation device according to each example embodiment of the present invention. That is, Fig. 7 illustrates a configuration of a computer (information processing device) capable of implementing the model generation device illustrated in Fig. 1 or 6, and illustrates a hardware environment capable of implementing the functions of corresponding one of the above-described example embodiments.

The information processing device 900 illustrated in Fig. 7 includes the following components.

- CPU (Central Processing Unit) 901
- ROM (Read _Only Memory) 902
- RAM (Random_Access_Memory) 903
- hard disk (storage device) 904
- communication interface 905
- bus 906 (communication line)
- reader/writer 908 capable of reading and writing data stored in a recording medium 907 such as a CD-ROM (Compact_Disc_Read_Only_Memory)
- input/output interface 909 such as a monitor, a speaker, and a keyboard

That is, the information processing device 900 including the above-described components is a general computer in which these components are connected via the bus 906. The information processing device 900 may include a plurality of CPUs 901 or a CPU 901 including a multi-core.

The present invention described with reference to the above-described example embodiments supplies a computer program capable of implementing the following functions to the information processing device 900 illustrated in Fig. 7. The functions are the above-described components illustrated in the block diagrams (Figs. 1 and 6) referred to in the description of the example embodiments or the functions of the flowchart (Fig. 5). The present invention is then achieved by loading the computer program to the CPU 901 of the hardware, and then interpreting and executing the computer program. The computer program supplied to the device may be stored in a read-write volatile memory (RAM 903) or a non-volatile storage device such as the ROM 902 or the hard disk 904.

In the case described above, a currently general procedure can be used as a method of supplying the computer program into the hardware. Examples of the procedure include, for example, a method of installing the computer program into the device via the recording medium 907 of various types such as a CD-ROM, a method of downloading the computer program from an external device via a communication line such as the Internet, or the like. In such a case, the present invention can be considered to be implemented by codes included in the computer program or the recording medium 907 storing the codes.

The present invention has been described above with reference to the above-described example embodiments as examples. However, the present invention is not limited to the example embodiments described above. It will be understood by those of ordinary skill in the art that various changes in form and details may be made therein without departing from the spirit and scope of the present invention as defined by the claims.

This application is based upon and claims the benefit of priority from Japanese patent application No. 2018-100551, filed on May 25, 2018, the disclosure of which is incorporated herein in its entirety by reference.


[Reference signs List]

| 10 | model generation device |
| 11 | Weibull plot generation unit |
| 12 | Weibull distribution model generation unit |
| 13 | calculation unit |
| 14 | determination unit |
| 15 | storage unit |
| 151 | failure history information |
| 152 | order-statistic calculation method information |
| 153 | Weibull plots |
| 154 | Weibull coefficient calculation result |
| 155 | information criterion information |
| 156 | goodness of fit calculation result |
| 20 | management terminal device |
| 30 | model generation device |
| 301 | failure history information |
| 31 | actual operation information generation unit |
| 311 | actual operation information |
| 32 | probability distribution model generation unit |
| 321 | probability distribution model |
| 33 | calculation unit |
| 330 | information criterion |
| 331 | goodness of fit |
| 34 | determination unit |
| 900 | information processing device |
| 901 | CPU |
| 902 | ROM |
| 903 | RAM |
| 904 | hard disk (storage device) |
| 905 | communication interface |
| 906 | bus |
| 907 | recording medium |
| 908 | reader/writer |
| 909 | input/output interface |

**Claims**

1. A model generation device for life prediction comprising:

    actual operation information generation means for generating actual operation information indicating a relationship between a use time and a reliability of an object whose life is predicted, in accordance with failure history information of the object by using an order-statistic calculation method;
    probability distribution model generation means for setting a number of division by which the use time is divided into one or more periods, and then generating a probability distribution model that approximates the actual operation information for each of the periods obtained by dividing the use time by the number of division being set;
    calculation means for calculating a goodness of fit of the probability distribution model to the actual operation information for each of the number of division by using an information criterion; and
    determination means for determining the probability distribution model at the number of division providing the highest goodness of fit.

2. The model generation device for life prediction according to claim 1, wherein
    the probability distribution model generation means generates the distribution model for each number of division while sequentially increasing the number of division, and
    the determination means detects the number of division at which a change of the goodness of fit turns from increase to decrease as the number of division increases.

3. The model generation device for life prediction according to claim 1 or 2, wherein the probability distribution model generation means calculates a coefficient representing the probability distribution model by performing linear interpolation in accordance with values indicated by the actual operation information at both ends of each of the periods obtained by the division.

4. The model generation device for life prediction according to any one of claims 1 to 3, wherein the probability distribution model generation means divides the use time, which has been logarithmically converted, into periods having equal lengths or substantially equal lengths.

5. The model generation device for life prediction according to any one of claims 1 to 4, wherein the probability distribution model is a Weibull distribution model or a gamma distribution model.

6. The model generation device for life prediction according to any one of claims 1 to 5, wherein the actual operation information generation means uses, as the order-statistic calculation method, an average rank method, a median rank method, or a mode rank method.

7. The model generation device for life prediction according to any one of claims 1 to 6, wherein the calculation means uses Akaike's Information Criterion or Bayesian Information Criterion as the information criterion.

8. The model generation device for life prediction according to any one of claims 1 to 7, wherein the failure history information of the object is information in which at least one of information indicating a characteristic of the object and identification information capable of identifying the object is associated with a failure history of the object.

9. A model generation method for life prediction performed by an information processing device, comprising:

    generating actual operation information indicating a relationship between a use time and a reliability of an object, in accordance with failure history information of the object by using an order-statistic calculation method;
    setting a number of division by which the use time is divided into one or more periods, and then generating a probability distribution model that approximates the actual operation information for each of the periods obtained by dividing the use time by the number of division being set;
    calculating a goodness of fit of the probability distribution model to the actual operation information for each of the number of division by using an information criterion; and
    determining the probability distribution model at the number of division providing the highest goodness of fit.

10. A recording medium storing a model generation program for life prediction that causes a computer to:

    generate actual operation information indicating a relationship between a use time and a reliability of an object, in accordance with failure history information of the object by using an order-statistic calculation method;

set a number of division by which the use time is divided into one or more periods, and then generate a probability distribution model that approximates the actual operation information for each of the periods obtained by dividing the use time by the number of division being set;

calculate a goodness of fit of the probability distribution model to the actual operation information for each of the number of division by using an information criterion; and

determine the probability distribution model at the number of division providing the highest goodness of fit.

Fig. 1

MODEL GENERATION DEVICE — 10

MANAGEMENT TERMINAL DEVICE — 20

WEIBULL PLOT GENERATION UNIT — 11

WEIBULL DISTRIBUTION MODEL GENERATION UNIT — 12

CALCULATION UNIT — 13

DETERMINATION UNIT — 14

STORAGE UNIT — 15

FAILURE HISTORY INFORMATION — 151

ORDER-STATISTIC CALCULATION METHOD INFORMATION — 152

WEIBULL PLOTS — 153

WEIBULL COEFFICIENT CALCULATION RESULT — 154

INFORMATION CRITERION INFORMATION — 155

GOODNESS OF FIT CALCULATION RESULT — 156

## Fig. 2

## Fig. 3

## Fig. 4

# Fig. 5

```
                    ┌─────────────┐
                    │    START    │
                    └──────┬──────┘
                           │
                           ▼
┌──────────────────────────────────────────────────────┐
│  CHARACTERISTIC INFORMATION OF OBJECT WHOSE LIFE IS    │  S101
│  PREDICTED OR IDENTIFIER OF OBJECT IS INPUT            │
└──────────────────────────┬───────────────────────────┘
                           │
                           ▼
┌──────────────────────────────────────────────────────┐
│  GENERATE WEIBULL PLOTS 153 BASED ON INPUT CHARACTERISTIC │  S102
│  INFORMATION OR FAILURE HISTORY INFORMATION 151 INDICATED │
│  BY IDENTIFIER AND ORDER-STATISTIC CALCULATION METHOD    │
│  INFORMATION 152                                          │
└──────────────────────────┬───────────────────────────┘
                           │
                           ▼
┌──────────────────────────────────────────────────────┐
│  ADD 1 TO THE NUMBER OF DIVISION M (INITIAL VALUE IS 0) │  S103
└──────────────────────────┬───────────────────────────┘
                           │
                           ▼
┌──────────────────────────────────────────────────────┐
│  DIVIDE USE TIME INTO M PERIODS, AND CALCULATE WEIBULL │  S104
│  COEFFICIENTS mi BY PERFORMING LINEAR INTERPOLATION ON │
│  RESPECTIVE PERIODS OBTAINED BY DIVISION BASED ON VALUES │
│  INDICATED BY WEIBULL PLOTS 153 AT BOTH ENDS OF PERIOD │
└──────────────────────────┬───────────────────────────┘
                           │
                           ▼
┌──────────────────────────────────────────────────────┐
│  CALCULATE GOODNESS OF FIT OF WEIBULL DISTRIBUTION MODEL │  S105
│  REPRESENTED BY CALCULATED WEIBULL COEFFICIENTS mi TO  │
│  WEIBULL PLOTS 153 BASED ON INFORMATION CRITERION      │
│  INFORMATION 155                                        │
└──────────────────────────┬───────────────────────────┘
                           │
                           ▼
┌──────────────────────────────────────────────────────┐
│  COMPARE GOODNESS OF FIT WHEN THE NUMBER OF DIVISION IS M │  S106
│  WITH GOODNESS OF FIT WHEN THE NUMBER OF DIVISION IS M-1 │
└──────────────────────────┬───────────────────────────┘
                           │
                           ▼
                    DOES GOODNESS                          S107
          OF FIT INCREASE FROM THAT WHEN THE NUMBER OF  ────────► Yes
                    DIVISION IS M – 1?
                           │ No
                           ▼
┌──────────────────────────────────────────────────────┐
│  DETERMINE WEIBULL DISTRIBUTION MODEL REPRESENTED BY   │  S108
│  WEIBULL COEFFICIENT CALCULATION RESULT 154 WHEN THE   │
│  NUMBER OF DIVISION IS M – 1 AS WEIBULL DISTRIBUTION MODEL │
│  THAT BEST FITS THE WEIBULL PLOTS 153                  │
└──────────────────────────┬───────────────────────────┘
                           │
                           ▼
                    ┌─────────────┐
                    │     END     │
                    └─────────────┘
```

## Fig. 6

MODEL GENERATION DEVICE — 30

FAILURE HISTORY INFORMATION — 301

ACTUAL OPERATION INFORMATION GENERATION UNIT — 31
ORDER–STATISTIC CALCULATION METHOD — 310

ACTUAL OPERATION INFORMATION — 311

PROBABILITY DISTRIBUTION MODEL GENERATION UNIT — 32

PROBABILITY DISTRIBUTION MODEL — 321

CALCULATION UNIT — 33
INFORMATION CRITERION — 330

GOODNESS OF FIT — 331

DETERMINATION UNIT — 34

# Fig. 7

900

INFORMATION PROCESSING DEVICE

901
CPU

909
INPUT/
OUTPUT
INTERFACE

906

905
COMMUNI-
CATION
I/F

904
HARD DISK

903
RAM

902
ROM

908
READER/
WRITER

907
RECORDING MEDIUM

## INTERNATIONAL SEARCH REPORT

| International application No. |
| --- |
| PCT/JP2019/020289 |

### A. CLASSIFICATION OF SUBJECT MATTER
Int.Cl. G06Q10/04(2012.01)i

According to International Patent Classification (IPC) or to both national classification and IPC

### B. FIELDS SEARCHED
Minimum documentation searched (classification system followed by classification symbols)
Int.Cl. G06Q10/04

Documentation searched other than minimum documentation to the extent that such documents are included in the fields searched

| | |
| --- | --- |
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | AKIYAMA, Y., "複合モードワイブル", オンライン, 09 August 2008 [retrieval date 14 August 2019], page 1, URL:http://www005.upp.so-net.ne.jp/akiyamay/page017.html, ("Multi-mode Weibull", Online) | 1-10 |
| Y | 菊池 富男, "第2章-1 ワイブル分布", オンライン, 23 December 2015 [retrieval date 14 August 2019], pp. 18-40, URL:https://web.archive.org/web/20151223112414/http://ktsc.cafe.coocan.jp/reliability1.pdf, non-official translation (KIKUCHI Tomio, "Chapter 2-1 Weibull distribution", Online) | 1-10 |

☒ Further documents are listed in the continuation of Box C.  ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 15 August 2019 (15.08.2019) | 27 August 2019 (27.08.2019) |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

International application No.

PCT/JP2019/020289

C (Continuation). DOCUMENTS CONSIDERED TO BE RELEVANT

| Category* | Citation of document, with indication, where appropriate, of the relevant passages | Relevant to claim No. |
|---|---|---|
| Y | 市川 雅教, 豊川 裕之, "食料供給量と死亡率の関連に関する研究", 民族衛生, 47巻2号, 日本民族衛生学会, March 1981, pp. 88-100, Online ISSN: 1882-868X, (ICHIKAWA, Masanori, TOYOKAWA, Hiroyuki, "The study on the relationship between food supply and mortality rates", Japanese Journal of Health and Human Ecology, vol. 47, no. 2, The Japanese Society of Health and Human Ecology) | 1-10 |
| A | JP 2016-126728 A (MITSUBISHI HEAVY INDUSTRIES, LTD.) 11 July 2016, entire text, all drawings (Family: none) | 1-10 |
| A | AKIYAMA, Y., "エクセル用分析ワークシート", オンライン, 08 November 2010 [retrieval date 14 August 2019], pp. 1-2, URL:https://web.archive.org/web/20101108002824/http://www005.upp.so-net.ne.jp:80/akiyamay/index.html, non-official translation ("Analysis worksheet for Excel", Online) | 1-10 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016126728 A
- JP 2008190886 A

- JP 2018100551 A